# EUROPEAN PATENT APPLICATION

(11) **EP 4 624 777 A1**
(43) Date of publication of application: **01.10.2025**
(21) Application number: 25165341.6
(22) Date of filing: 21.03.2025
(51) Int. Cl.: F16D 65/12, F16D 65/847, F16D 65/02

(54) **BRAKE DISC**

(30) Priority: 27.03.2024 IT 202400006838
(71) Applicant: Brembo SGL Carbon Ceramic Brakes S.p.A., 24040 Stezzano (BG) (IT)
(72) Inventor: CARNEVALI, Guido, 21057 Olgiate Olona (VA) (IT); PALOMINO SOLIS, Daniel Angel, 27010 Bornasco (PV) (IT); IAVARONE, Paolo, 24124 Bergamo (BG) (IT)
(74) Representative: Fabiano, Piero

(57) **Abstract**

A brake disc (1) comprising a brake bell (2) and a braking band (3) radially outer with respect to the latter is described, said band (2) and said brake bell (3) extending around a common axis of rotation (X-X); said braking band (2) being made of a composite material and having side braking surfaces (4) adapted to cooperate with a respective brake caliper thus exerting a braking action on the vehicle on which said brake disc (1) is installed; said side surfaces (4) defining, in addition, a plurality of ventilation channels (5) arranged away from the axis of rotation (X-X),
said ventilation channels (5) extending along an extent direction (Z-Z) between a radially inner air opening (6) and a radially outer air opening (7);
said braking band (2) being provided with an inner ring (10) provided with two side faces (8-9),
said inner ring (10) being arranged radially inner with respect to said side braking surfaces (4), characterized in that it comprises at least one circumferential groove (12) configured so that said radially inner air opening (6) is arranged at least partially on a first side wall (13) of said circumferential groove (12) and lies at least partially in a plane inclined with respect to a direction parallel to said axis of rotation (X-X) thus forming an inclination angle α.

## Description

### Field of the invention

The present invention relates to a brake disc for disc braking systems. In particular, the invention relates to brake discs for high-performance vehicles, provided with a braking annulus or band made of carbonaceous-matrix composite material, coaxially and internally to which a metal bell-shaped element integral therewith is provided.

### Known art

The following documents describe some examples of braking systems in particular provided with braking band made of carbonaceous-matrix composite material: WO2019043616 and EP2378153.

### Summary of the invention

As is well known, the so-called carbonaceous-matrix discs are also normally known as carbon discs or carbon-ceramic discs.

Brake discs may comprise a braking band and a brake bell that are made in separate pieces and assembled by using at least one connecting device.

The connection between the braking band and the brake bell is very important because it ensures the braking torque from the braking band to the brake bell to be transferred. Tangential constraint between the braking band and the brake bell can be made with systems that provide protuberances of the braking band that couple in respective brake bell seats so as to make a tangential constraint system between braking band and brake bell that has a particularly simple structure and thus low production costs.

The Applicant also noted that ventilation is another particularly important aspect in designing disc brakes.

It is well known indeed that in order to maximize the heat extracted from the brake disc, it is important that the air stream flows within the ventilation channels in such a way as to ensure as little pressure drops as possible, and in such a way as to maximize the heat exchange and the flow rate of the flow of overheated cooling air exiting from the radially outer edge of the braking band of the rotating disc brake.

Therefore, the Applicant was faced with the problem of making a brake disc that allows its ventilation to be optimized.

In particular, the Applicant was faced with the problem of increasing the airflow rate entering the ventilation channels in the unit time and generating the least turbulent possible air flow and consequently more orderly air flow entering the same ventilation channels.

Indeed, the Applicant has found that, by properly directing the inlet openings of the ventilation channels so that they are oriented according to the direction of the air flow entering the ventilation channels, it is possible to achieve less turbulent air flow and consequently an increase in the airflow rate entering the ventilation channels in the unit time, to the benefit of ventilation efficiency.

Therefore, in a first aspect, the invention relates to a brake disc comprising a brake bell and a braking band radially outer with respect to the latter, said band and the brake bell extending around a common axis of rotation; said braking band being made of a composite material and having side braking surfaces adapted to cooperate with a respective brake caliper thus exerting a braking action on the vehicle on which said brake disc is installed; said side surfaces defining, in addition, a plurality of ventilation channels arranged away from the axis of rotation, said ventilation channels extending along an extent direction between a radially inner air opening and a radially outer air opening;
the braking band being provided with an inner ring provided with two side faces,
said inner ring being arranged radially inner with respect to said side braking surfaces, characterized in that it comprises at least one circumferential groove configured so that said radially inner air opening is arranged at least partially on a first side wall of said circumferential groove and lies at least partially in a plane inclined with respect to a direction parallel to said axis of rotation thus forming an inclination angle α.

As a result, the Applicant has achieved a new optimization of heat exchange and thus cooling of the air flowing inside the ventilation channels.

For the purposes of this invention, the following definitions apply:
"Axial direction" is defined as a direction substantially coincident with or substantially parallel to the axis of rotation of the brake disc.

By "radial direction" is meant a direction substantially orthogonal to the axial direction.

By "tangential or circumferential direction" is meant a direction orthogonal to both axial and radial directions.

The present invention, in one or more preferred aspects, may comprise one or more of the following features.

Preferably, the inclination angle of the first side wall is greater than or equal to 10° and less than or equal to 80°.

Conveniently, the circumferential groove comprises, in addition to the aforementioned first side wall, a second side wall and at least one bottom wall connecting the first and second side walls.

Advantageously, the radially inner air opening partially extends over the aforementioned at least one bottom wall.

Preferably, the circumferential groove has an inclined direction with respect to a direction parallel to said axis of rotation, thus forming an inclination angle β.

Conveniently, the circumferential groove has a maximum depth, measured in a direction parallel or coincident with said extent direction, greater than or equal to 10 mm.

Advantageously, the aforesaid maximum depth is less than or equal to 80 mm.

Conveniently, the circumferential groove has a maximum width measured in a direction orthogonal to the extent direction greater than or equal to 2 mm and less than or equal to 30 mm.

Conveniently, the circumferential groove is arranged radially between said inner ring and the side braking surfaces.

Preferably, the circumferential groove extends circumferentially for at least 200°, even more preferably for 360°.

Further characteristics and advantages of the invention will become clearer from the detailed description of some preferred, but not exclusive, embodiments of a brake disc according to the present invention.

### Brief description of the drawings

This description will be set forth hereinafter with reference to the attached drawings provided for illustration purposes only and without limitation, in which:
- figure 1 shows a schematic view of a first embodiment of the brake disc according to the invention;
- figure 2 is a plan view of the brake disc of figure 1;
- figure 3 is a schematic sectional view of a portion of the brake disc and taken along to the E-E sectional plane of figure 2; and
- figure 4 is a schematic view of the profile of a portion of the section of figure 3.

### Detailed description of embodiments of the invention

With reference to the attached figures, a brake disc according to the present invention is generally denoted by 1.

The brake disc 1 comprises and is constituted by a metal brake bell 2 and a braking band 3 radially outside the latter.

The metal brake bell 2 and the braking band 3 extend around a common central axis of rotation denoted by X-X.

The axis of rotation defines an axial direction X-X coincident with or parallel to the axis of rotation, a radial direction R-R orthogonal to the axial direction X-X, and a tangential direction T-T or circumferential direction T-T orthogonal to both the axial direction X-X and the radial direction R-R.

The braking band 3, made of a composite material such as a carbon-ceramic type, is provided with two side braking surfaces denoted by 4, which are adapted to be engaged by a brake caliper (not shown) of a disc braking system.

A plurality of ventilation channels 5 is defined and formed between the two side surfaces 4 belonging to the braking band 3.

The ventilation channels 5 extend away from the axis of rotation X-X along an extent axis Z-Z, preferably substantially rectilinear, substantially to the radially outer edge of the braking band 3.

The ventilation channels 5 are preferably arranged inclined with respect to a direction radial to the axis of rotation X-X.

In other words, the extent axis Z-Z of the ventilation channels 5 forms an angle greater than or equal to 30°, preferably greater than or equal to 40°, even more preferably less than or equal to 70°, with a radial direction to the axis of rotation X-X.

Furthermore, the extent axis Z-Z of the ventilation channels forms an angle, with a radial direction, greater than or equal to 10°.

Preferably, the ventilation channels 5 do not have a constant cross-section, along their extent axis Z-Z, but a cross section that increases away from the axis of rotation X-X.

By cross section of a ventilation channel 5 is meant a cross section of the ventilation channel 5 substantially orthogonal to the extent axis Z-Z of the ventilation channel 5 itself.

Each ventilation channel 5 comprises at least one radially inner air opening 6 facing the axis of rotation X-X, one radially outer air opening 7 arranged at the radially outer edge of the braking band 3.

Each radially inner air opening 6 has an area greater than or equal to 36 mm².

Each radially outer air opening 7 has an area greater than or equal to the area of the radially inner air opening 6.

Each radially outer air opening 7 has an area less than or equal to 700 mm².

Furthermore, the brake disc 1 comprises a brake bell 2, which is adapted to be operationally connected to a vehicle wheel that can be combined with the braking band 3.

The braking band 3 is provided with a radially inner ring 10, which is preferably flat and continuous, wherein M-M indicates its median plane.

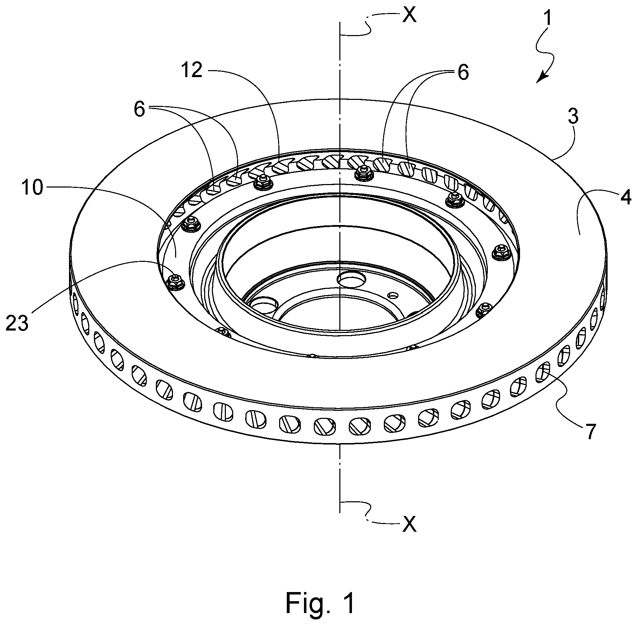

The continuous inner ring 10 has two side faces 8, 9 of which, with reference to figure 1, one faces upward 8 and one faces downward 9.

The inner ring 10 is arranged radially internally with respect to the side braking surfaces 4.

In the radial direction between the inner ring 10 and the side braking surfaces a circumferential groove 12 configured to help to convey air into the ventilation channels 5 is arranged.

In other words, the circumferential groove 12 is configured to help to align the air flow with the radially inner air inlet opening 6.

For this purpose, the circumferential groove 12 is configured so that said radially inner air opening 6 is arranged at least partially on a first side wall 13 of the circumferential groove 12 and lies at least partially in a plane inclined with respect to a direction parallel to the axis of rotation X-X thus forming an inclination angle α.

Preferably, the inclination angle α is greater than or equal to 10° and less than or equal to 80°.

Even more preferably, the inclination angle α is greater than or equal to 15° and less than or equal to 70°.

According to a preferred embodiment, the circumferential groove 12 extends circumferentially for at least 200°.

In the embodiment shown in figures, the circumferential groove 12 extends circumferentially for 360°, seamlessly.

However, embodiments may be provided in which the circumferential groove 12 extends circumferentially for less than 360°, having discontinuities in the circumferential direction.

Therefore, the circumferential groove 12 has a first side wall 13, a second side wall 14 and at least one connecting bottom wall 15 arranged between the first 13 and the second 14 side walls.

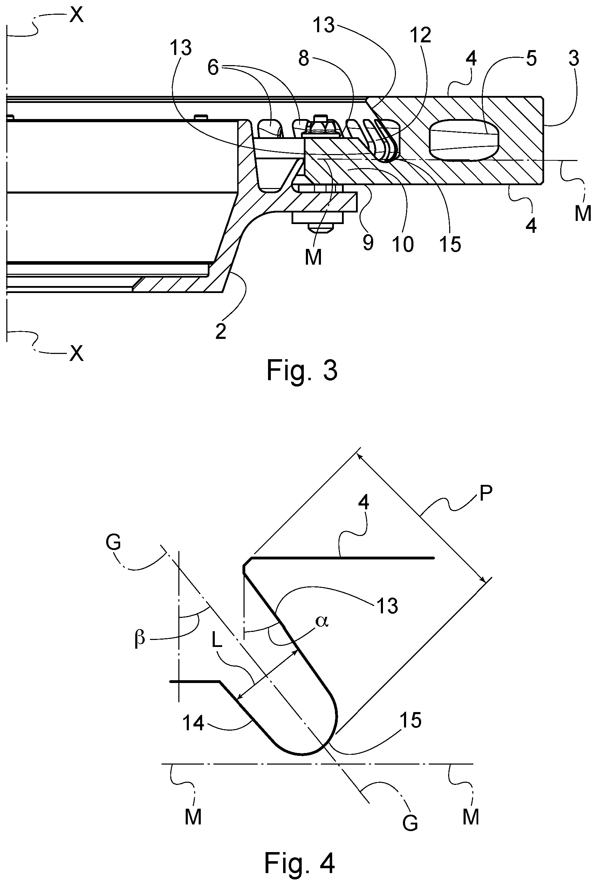

As shown in figure 3, the circumferential groove 12 does not extend vertically but rather exhibits an inclined slope with respect to the axis of rotation X-X.

In particular, the circumferential groove 12 has an extent direction G-G inclined with respect to the axis of rotation X-X, thus forming an inclination angle β which is substantially coincident with the inclination angle α of the first side wall 13.

The circumferential groove 12 has a maximum depth P, measured in a direction parallel or coincident with the extent direction G-G, greater than or equal to 10 mm.

The circumferential groove 12 has a maximum depth P, measured in a direction parallel or coincident with the extent direction, less than or equal to 80 mm.

The maximum depth P along the extent direction G-G is measured as the projection along the extent direction G-G of the first side wall 13 from the point of intersection between the bottom wall 15 of the circumferential groove itself and the extent direction G-G.

Furthermore, the circumferential groove 12 has a maximum width L measured in a direction orthogonal to the extent direction G-G greater than or equal to 2 mm and less than or equal to 30 mm.

In the embodiment shown in the figures, the radially inner air opening 6 is arranged on the first side wall 13 of the circumferential groove 12 for a considerable portion of its extent.

The radially inner air opening 6 is arranged on the first side wall 13 of the circumferential groove 12 for at least 50% of its extent.

Preferably, the radially inner air opening 6 is arranged on the first side wall 13 of the circumferential groove 12 for at least 80% of its extent.

In the embodiment shown in the figures, the radially inner air opening 6 is, in addition, also arranged on the bottom wall 15 of the circumferential groove 12.

Preferably, the radially inner air opening 6 is arranged on the bottom wall 15 of the circumferential groove 12 for at most 15% of its extent.

By extent of the radially inner air opening 6 is meant its extent according to its prevailing dimension, i.e. with reference to figure 4, except for the last section where the opening is curved, a direction substantially parallel to the extent direction G-G of the circumferential groove 12.

The inner ring 10 may have at least one coupling element 23 that runs substantially orthogonally to the median plane M-M from a side face 8 of the inner ring 10.

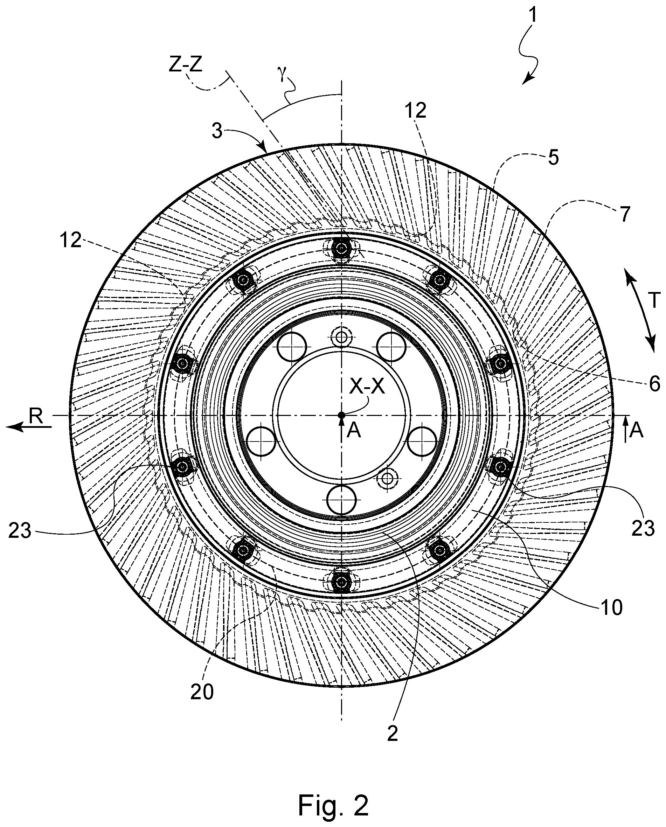

With reference to figures 2 and 3 and according to the preferred embodiment, the inner ring 10 has not just one but a plurality of coupling elements 23 distributed along a coupling circumference 20 concentric to the central axis of rotation X-X.

The coupling elements 23 provide a seat for housing coupling means, typically screw coupling means, and are configured to allow coupling between the metal brake bell 2 and the braking band 3.

The coupling elements 23 are spaced angularly, preferably consistently along the coupling circumference 20.

Preferably, there are eight to fourteen coupling elements 23 per brake disc 1, even more preferably there are nine to thirteen coupling elements 23 per brake disc 1.

Thanks to the above described features provided separately or in combination, it is possible to provide a solution to the cooling needs of the brake disc with optimized heat transfer inside the ventilation channels.

Various modifications may be made to the embodiments described in detail, all anyhow remaining within the protection scope of the invention, as defined by the following claims.

## Claims

1. Brake disc (1) comprising a brake bell (2) and a braking band (3) radially outer with respect to the latter, said band (2) and said brake bell (3) extending around a common axis of rotation (X-X); said braking band (2) being made of a composite material and having side braking surfaces (4) adapted to cooperate with a respective brake caliper thus exerting a braking action on the vehicle on which said brake disc (1) is installed; said side surfaces (4) defining, in addition, a plurality of ventilation channels (5) arranged away from the axis of rotation (X-X),
said ventilation channels (5) extending along an extent direction (Z-Z) between a radially inner air opening (6) and a radially outer air opening (7);
said braking band (2) being provided with an inner ring (10) provided with two side faces (8-9),
said inner ring (10) being arranged radially inner with respect to said side braking surfaces (4), **characterized in that** it comprises at least one circumferential groove (12) configured so that said radially inner air opening (6) is arranged at least partially on a first side wall (13) of said circumferential groove (12) and lies at least partially in a plane inclined with respect to a direction parallel to said axis of rotation (X-X) thus forming an inclination angle α.

2. Brake disc (1) according to claim 1, **characterized in that** said inclination angle α is greater than or equal to 10° and less than or equal to 80°.

3. Brake disc (1) according to claim 1 or 2, **characterized in that** said groove comprises said first side wall (13), a second side wall (14) and at least one bottom wall (15) connecting said first (13) and said second (14) side wall.

4. Brake disc (1) according to claim 1 or 2, **characterized in that** said radially inner air opening (6) extends partially on said at least one bottom wall (15).

5. Brake disc (1) according to claim 3 or 4, **characterized in that** said circumferential groove (12) has an extent direction (G-G) inclined with respect to a direction parallel to said axis of rotation (X-X) thus forming an inclination angle β.

6. Brake disc (1) according to claim 5, **characterized in that** said circumferential groove (12) has a maximum depth (P), measured in a direction parallel or coincident with said extent direction (G-G), greater than or equal to 10 mm.

7. Brake disc (1) according to claim 6, **characterized in that** said maximum depth (P) is less than or equal to 80 mm.

8. Brake disc (1) according to any one of claims 5 to 7, **characterized in that** said circumferential groove has a maximum width (L), measured in a direction orthogonal to the extent direction (G-G), greater than or equal to 2 mm and less than or equal to 30 mm.

9. Brake disc (1) according to any one of preceding claims 5 to 8, **characterized in that** said circumferential groove (12) is arranged radially between said inner ring (10) and said side braking surfaces (4).

10. Brake disc (1) according to any one of preceding claims 1 to 9, **characterized in that** said circumferential groove (12) extends circumferentially for at least 200°.
